# EUROPEAN PATENT APPLICATION

(11) **EP 4 844 569 A1**
(43) Date of publication of application: **25.11.2026**
(21) Application number: 26179891.2
(22) Date of filing: 20.05.2026
(51) Int. Cl.: G06F 3/16, G06F 1/16, G06F 3/01, G06F 3/03, G06F 40/30, G10L 15/18, H04M 1/72454, G02B 27/01, G10L 15/22

(54) **VOICE CONTROL METHOD, WEARABLE ELECTRONIC DEVICE AND NON-TRANSITORY COMPUTER-READABLE MEDIUM**

(30) Priority: 22.05.2025 US 202563810732 P; 13.03.2026 US 202619565574
(71) Applicant: HTC Corporation, Taoyuan City 330 (TW)
(72) Inventor: YU, Han-Kuan, 330 Taoyuan City (TW); LAI, Chien-Shen, 330 Taoyuan City (TW)
(74) Representative: Wagner & Geyer

(57) **Abstract**

A voice control method for a wearable electronic device is disclosed. The method performs a first analysis on a voice command to determine if it matches a set of predefined commands including a first and second subset. If the voice command matches the first subset, it is transmitted to a first AI assistant on a mobile communication device. If the voice command matches the second subset, it is executed directly on the wearable device. For the voice command not in the predefined set, a middleware AI model performs a second analysis to determine a semantic intent of the voice command. Based on the semantic intent, a task request is selectively transmitted to either the first AI assistant or a second AI assistant. The first AI assistant and the second AI assistant are configured to process different categories of tasks.

## Description

### RELATED APPLICATIONS

This application claims the priority benefit of U.S. Provisional Application Serial Number 63/810,732, filed May 22, 2025, which is herein incorporated by reference.

### BACKGROUND

### Field of Invention

The disclosure relates to a voice control method for a wearable electronic device. More specifically, this disclosure relates to the voice control method intelligently processing voice commands by integrating multiple artificial intelligence (AI) assistants to provide a seamless user experience on the wearable electronic device.

### Description of Related Art

Wearable electronic devices, such as smart glasses and augmented reality (AR) headsets, are becoming increasingly prevalent. These devices offer users a hands-free way to interact with digital information and the physical world. Voice commands have emerged as a primary input method for these devices, allowing users to request information or perform actions without manual input.

### SUMMARY

The disclosure provides a voice control method for a wearable electronic device is provided. The voice control method begins by receiving a voice command from a user via a microphone of the wearable electronic device. Subsequently, a first analysis is performed to determine whether the voice command matches a set of predefined commands, wherein this set comprises a first subset and a second subset. In response to determining that the voice command matches a predefined command in the first subset, the method involves transmitting the voice command to a first artificial intelligence (AI) assistant operating on a mobile communication device that is communicatively coupled with the wearable electronic device. Alternatively, if it is determined that the voice command matches another predefined command in the second subset, the command is executed directly on the wearable electronic device. However, in the event that the voice command does not match any predefined command, a second analysis is then performed by a middleware Al model operating on the wearable device to determine the semantic intent of the voice command. Finally, based on the determined semantic intent, a task request corresponding to the voice command is selectively transmitted to either the first Al assistant or a second AI assistant, wherein the first Al assistant and the second Al assistant are configured to process different categories of tasks.

The disclosure provides a wearable electronic device, which comprises a microphone, a communication circuit and a processor. The communication circuit is configured for communicatively connecting to a mobile communication device. The processor is coupled with both the microphone and the communication circuit. The processor is configured to execute a series of operations, starting with receiving a voice command from a user via the microphone. Upon receiving the command, the processor performs a first analysis to determine if the command matches one of a set of predefined commands, which is divided into a first and a second subset. In response to determining a match with a command in the first subset, the processor transmits the voice command to a first artificial intelligence (AI) assistant operating on the mobile communication device. If the command matches a command in the second subset, the processor executes it directly. For commands that do not match any predefined command, the processor is configured to perform a second analysis using a middleware Al model to determine the semantic intent of the command. Ultimately, based on this determined semantic intent, the processor selectively transmits a corresponding task request to either the first Al assistant or a second Al assistant. The first Al assistant and the second Al assistant are configured to process different categories of tasks.

The disclosure provides a non-transitory computer-readable medium having stored thereon instructions that, when executed by a processor of a wearable electronic device, cause the device to perform aforesaid voice control method.

It is to be understood that both the foregoing general description and the following detailed description are by examples, and are intended to provide further explanation of the invention as claimed.

### BRIEF DESCRIPTION OF THE DRAWINGS

The disclosure can be more fully understood by reading the following detailed description of the embodiment, with reference made to the accompanying drawings as follows:
FIG. 1 is a schematic diagram illustrating a hybrid Al assistant system according to some embodiments of this disclosure.
FIG. 2 is a block diagram illustrating further details within the wearable electronic device of the hybrid Al assistant system in FIG. 1 according to some embodiments of the disclosure.
FIG. 3 is a flowchart illustrating the steps of a voice control method according to an embodiment of the disclosure.
FIG. 4 illustrates another configuration of a hybrid Al assistant system according to another embodiment of the disclosure.
FIG. 5 illustrates another configuration of a hybrid Al assistant system according to another embodiment of the disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

Wearable electronic devices, such as smart glasses and smartwatches, are designed to seamlessly integrate into a user's daily life by providing convenient, contextual information with minimal physical intrusion. Due to their compact form factor, these wearable electronic devices inherently lack traditional input peripherals like keyboards or large touchscreens. This physical constraint makes complex manual data entry or navigation through intricate menus impractical and often counter-intuitive, especially when the user is mobile or has their hands occupied. Consequently, voice interaction has become the most natural and efficient method for controlling these devices and accessing their features. An Artificial Intelligence (AI) assistant serves as the crucial conversational interface that translates a user's spoken natural language commands into actionable tasks to the wearable electronic devices.

In some cases, Al assistants on wearable electronic devices operate in a fragmented manner. Some devices rely solely on a single, onboard Al assistant which may have limited capabilities. For example, a smart glass Al assistant might excel at controlling the device's hardware (e.g., taking a photo) but may lack the vast knowledge base or integration with personal data (e.g., contacts, calendar) that a smartphone-based assistant possesses.

Other devices act as a simple conduit to a general-purpose Al assistant on a paired smartphone, such as Google Assistant or Apple's Siri. While these smartphone assistants are powerful for tasks related to applications or functions directly executable on smartphone/mobile device (e.g., "send a message to John," "what's the weather?") or directly communicating to applications or functions on the smartphone/mobile device, they are typically not designed to leverage the unique, real-time sensor data of the wearable electronic device. For example, a user looking at a landmark cannot simply ask "What is that building?" and expect the smartphone assistant to "see" what the user is seeing through the wearable electronic device's camera.

A user might need to perform two separate interactions for a single overall task. For example, a user might first ask their smartphone assistant to check their calendar for a meeting's location, and then use a separate, onboard visual Al to identify the correct building upon arrival. This disrupts the natural flow of communication and forces the user to understand the capabilities and limitations of each separate Al service.

Therefore, there is a need for an improved system and method that can intelligently and seamlessly integrate the functionalities of different Al assistants to process a wide range of voice commands, thereby providing a more intuitive, efficient, and unified user experience on a wearable electronic device.

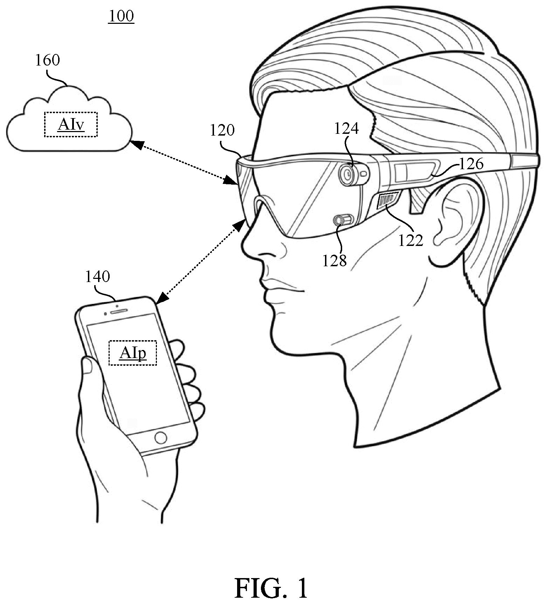

FIG. 1 is a schematic diagram illustrating a hybrid Al assistant system 100 according to some embodiments of this disclosure. As shown in FIG. 1, the hybrid Al assistant system 100 includes a wearable electronic device 120 (mounted on a user's head), a mobile communication device 140, and a remote server 160.

The wearable electronic device 120 as shown in FIG. 1 is a pair of smart glasses, which is the primary interface for the user. The wearable electronic device 120 in some other embodiments may also be an AR headset, a VR headset, or another equivalent device. The wearable electronic device 120 includes several components for interaction, such as a microphone 122 for capturing the user's voice commands, a camera 124 for capturing image data from the user's field of view, a speaker 126 for providing audio feedback, and a displayer 128 (e.g., a see-through display or a projection system) for providing visual feedback.

The mobile communication device 140, such as a smartphone, is communicatively coupled with the wearable electronic device 120, for example, via a short-range wireless protocol like Bluetooth or Wi-Fi. A first artificial intelligence assistant Alp, integrated with an operating system of the mobile communication device 140, can be a general-purpose smartphone assistant like Google Assistant, Apple's Siri, or Amazon's Alexa. The first artificial intelligence assistant Alp is adept at handling tasks related to the user's personal data and applications stored on the mobile communication device 140, such as making calls, sending messages, managing calendar events or activating a phone-based application (e.g., navigating application, translating application) on the mobile communication device 140.

A second artificial intelligence assistant Alv, running on the remote server 160, is a specialized AI, for example, a visual Al or a domain-specific expert system. In some embodiments, the second artificial intelligence assistant Alv is configured to perform complex tasks. These complex tasks are not suitable to be executed by the first artificial intelligence assistant Alp (or are not supported by native capabilities of the first artificial intelligence assistant Alp). In some embodiments, the second artificial intelligence assistant Alv is configured to execute tasks involving a real-time data captured by a sensor on the wearable electronic device 120. For example, the second artificial intelligence assistant Alv is configured to perform object recognition, landmark identification, facial identification, artwork identification or image-based language translation, based on image data captured by the camera 124 of the wearable electronic device 120. In other words, the first artificial intelligence assistant Alp and the second artificial intelligence assistant Alv are configured to process different categories of tasks, which will be further discussed in following embodiments.

In aforesaid embodiment, the real-time data captured by the sensor on the wearable electronic device 120 can the image data captured by the camera 124, but the disclosure is not limited thereto. In some other embodiments, the second artificial intelligence assistant Alv is configured to perform weather prediction based on a temperature sensing data captured by a temperature sensor (not shown in figures) of the wearable electronic device 120.

As shown in FIG. 1, the second artificial intelligence assistant Alv is run on the remote server 160. In some other embodiments, the second artificial intelligence assistant Alv may partially or wholly reside on the mobile communication device 140 or even the wearable electronic device 120 if the hardware permits.

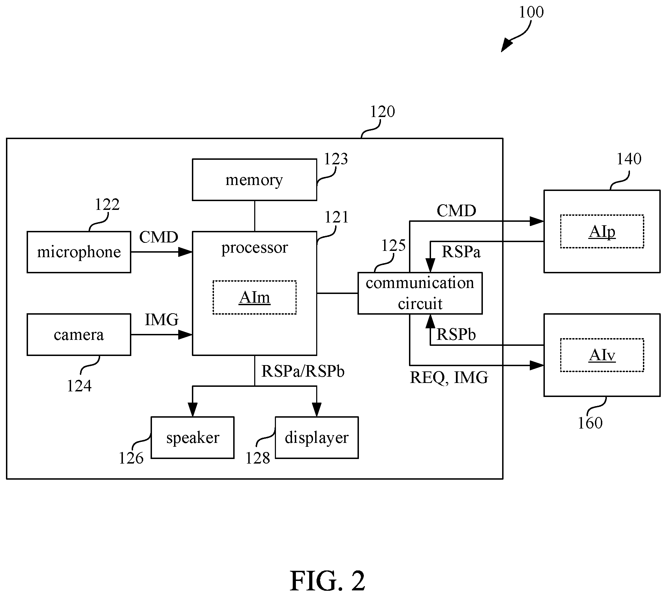

FIG. 2 is a block diagram illustrating further details within the wearable electronic device 120 of the hybrid Al assistant system 100 in FIG. 1 according to some embodiments of the disclosure. As shown in FIG. 2, the wearable electronic device 120 includes a processor 121, a memory 123, the microphone 122, the camera 124, a communication circuit 125, the speaker 126, and the displayer 128.

The processor 121 can be implemented by a central control unit of the device 120. The memory 123 is coupled to the processor 121 and stores instructions, data, and Al models. The memory 123 stores a middleware Al model (Alm). The middleware Al model Alm is executed on the processor 121 and utilized to classify or understand a semantic intent of voice commands CMD when the voice command CMD are not predefined instructions.

In some embodiments, the first Al assistant Alp is implemented as a conversational Al agent or a rule-based intelligent system. Its core architecture typically includes automatic speech recognition (ASR), natural language processing (NLP), and a plurality of predefined task modules. The first Al assistant Alp relies on a specific, finite set of instructions or command slots to execute tasks. Therefore, it is optimized for deterministic, system-level operations (e.g., 'turn on Bluetooth', 'call contact X') where the mapping between the user's utterance and the device's action is direct and structured.

Conversely, the second Al assistant Alv is implemented based on a Generative Al architecture, such as a large language model (LLM) (e.g., models similar to GPT, Gemini, or Llama). Unlike the first Al assistant Alp which relies on predefined command sets, the second Al assistant Alv generates content based on probabilistic prediction and is capable of deep reasoning. Furthermore, the second Al assistant Alv possesses multi-modal capabilities, allowing it to simultaneously process and understand inputs across different formats, such as text, images, and video, and perform cross-domain knowledge integration (e.g., analyzing an image of a plant to provide botanical details not stored locally).

The middleware Al model (Alm), while sharing some architectural similarities with the second Al assistant (e.g., utilizing neural network-based semantic understanding), is distinguished by its scale and function. The middleware Al model (Alm) is configured as a lightweight or small-scale model (e.g., a Small Language Model, SLM) specifically optimized for on-device execution with low latency. It is specific-function oriented, primarily trained for semantic analysis and intent classification rather than broad content generation. This allows the wearable electronic device 120 to intelligently route commands without the high computational overhead or latency associated with the full-scale large language model of the second Al assistant Alv.

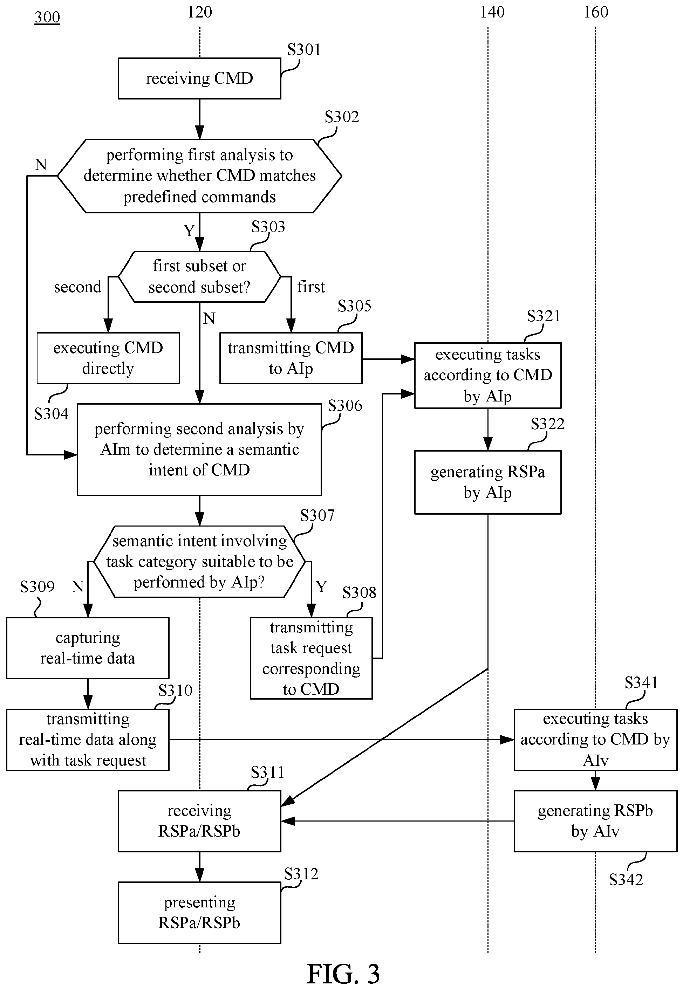

FIG. 3 is a flowchart illustrating the steps of a voice control method 300 according to an embodiment of the disclosure. The voice control method 300 is performed primarily by the wearable electronic device 120, in coordination with the mobile communication device 140 and the remote server 160, as shown in FIG. 2.

As illustrated in FIG. 2 and FIG. 3, step S301 is executed, to receive a voice command CMD from the user via the microphone 122 of the wearable electronic device 120. The voice command CMD may include a request, an inquiry, an assignment, a question, a decision and/or any similar instruction from the user.

The voice command CMD can range from simple, predefined instructions to complex, contextual inquiries. For example, the voice command CMD may include a predefined commands intended for the first Al assistant Alp may include communication-related instructions like "call mom" or "send a text to John saying I will be there in 10 minutes," and personal management tasks such as "set an alarm for 7 AM" or "what is my next meeting?". The voice command CMD may also include a predefined command for direct execution on the wearable electronic device 120 such as "take a photo," "start recording a video," or "turn up the voice volume" related to the wearable electronic device 120. The voice command CMD can also be openended, not predefined and involving real-time information (i.e., the image data IMG captured by the camera 124). Examples of such commands include visual identification queries like "What is this building?," "Who painted this artwork?," or "Identify this type of plant," as well as contextual memory tasks such as "Remember my parking spot" and real-time information requests like "Translate the text on that sign."

At step S302, the processor 121 performs a first analysis on the voice command CMD to determine whether the voice command matches a set of predefined commands. The set of predefined commands includes a first subset and a second subset. The first analysis includes performing a keyword matching or a string matching operation between the voice command and the set of predefined commands. The first analysis is a computationally inexpensive process, such as a keyword matching or string matching operation. The purpose of the first analysis is to quickly determine if the voice command CMD matches a command in a set of predefined commands. This first analysis is designed to be completed in a shorter computation time than a second analysis (will be discussed in step S306), ensuring rapid responses for common tasks.

If the voice command CMD matches a predefined command (i.e., path Y at step S302), the voice control method 300 proceeds to step S303, and the processor 121 determines if the voice command CMD matches with a first subset or a second subset. In some embodiments, the first subset of predefined commands is associated with functions of the mobile communication device 140, and the second subset of predefined commands is associated with hardware functions and/or software functions of the wearable electronic device 120 itself.

In a non-limiting embodiment, the set of predefined commands can be stored as a list or a database in the memory 123. The first subset, associated with the first Al assistant Alp, may contain keywords or trigger phrases such as "Call," "Send a message," "Text," "Set an alarm," "Set a reminder," and "Play music." During the first analysis, the processor 121 scans the voice command CMD for these keywords. Upon detecting the keyword "Call" in the command "Call Mom," the processor 121 categorizes the command as belonging to the first subset and prepares to transmit it to the mobile communication device 140. Similarly, the second subset, associated with direct execution on the wearable electronic device 120, may contain keywords such as "Take a photo," "Record video," "Volume up," "Volume down," and "Adjust brightness." If the voice command CMD includes "Take a photo," the first analysis will detect the keyword phrase "Take a photo," classify the command as belonging to the second subset, and subsequently execute the voice command CMD directly by activating the camera 124.

If the voice command CMD matches the predefined command in the second subset, the voice control method 300 proceeds to step S304. At step S304, the processor 121 executes a task corresponding to the voice command CMD directly on the wearable electronic device 120. For example, the processor 121 may trigger the camera 124 on the wearable electronic device 120 to capture a photo (in response to the voice command CMD "Take a photo"), or the processor 121 may adjust a voice volume setting of the speaker 126 on the wearable electronic device 120 (in response to the voice command CMD "Volume up" or "Volume down").

In some embodiments, the hardware functions of the wearable electronic device 120 corresponding to the second subset of predefined commands may include, but are not limited to, capturing an image or recording a video via the camera 124, adjusting an audio volume level of the speaker 126, muting the microphone 122, or adjusting a brightness level of the displayer 128. Furthermore, the software functions of the wearable electronic device 120 corresponding to the second subset may include, but are not limited to, launching a local application (e.g., a stopwatch, a timer, or a local media player) stored in the memory 123, navigating through a user interface (UI) menu presented on the displayer 128 (e.g., executing commands such as 'scroll down', 'select item', or 'go back'), or toggling a system operational mode (e.g., activating a 'Do Not Disturb' mode or a 'Low Power' mode) of the wearable electronic device 120. These functions are executed locally by the processor 121 without requiring transmission to the mobile communication device 140 or the remote server 160.

This direct execution pathway is able to minimize latency and provides an immediate response for time-sensitive hardware functions. By handling these commands locally without the need for communication with the mobile communication device 140 or confirmation from other Al models (such as Alp or Alm), the wearable electronic device 120 ensures a highly responsive and efficient user experience. This is helpful for the user to experience an instantaneous result.

If the voice command CMD matches the predefined command in the first subset, the voice control method 300 proceeds to step S305, and the processor 121 transmits the voice command CMD (e.g., Call Mom) to the first Al assistant, Alp, operating on the mobile communication device 140. The first Al assistant executes the task corresponding to the voice command at step S321 (e.g., initiates the phone call to mother in a contact list on the mobile communication device 140) and generates a task execution response RSPa at step S322 (e.g., an audio confirmation "Calling Mom"). This task execution response RSPa is then sent back to the wearable electronic device 120.

At step S305, the processor 121 transmits the voice command CMD to the first Al assistant, Alp, on the mobile communication device 140. The first Al assistant operating on the mobile communication device 140 executes the task corresponding to the voice command CMD at step S321 (e.g., initiates the phone call) and generates a response at step S322 (e.g., an audio confirmation "Calling Mom"). This response is then sent back to the wearable electronic device 120.

If the voice command CMD does not match any predefined command (i.e. path N at step S302) or the voice command CMD cannot be classified into the first subset or the second subset (i.e. path N at step S302), the voice control method 300 proceeds to step S306. In response to determining that the voice command CMD does not match any predefined command in the set of predefined commands, step S306 is executed to perform a second analysis by a middleware Al model AIm operating on the processor 121 of the wearable electronic device 120 to determine a semantic intent of the voice command CMD.

For example, when a user looking at a monument asks "what's the history of this structure?" as the voice command CMD, the middleware Al model AIm analyzes this voice command CMD and determines the semantic intent is "visual-based information retrieval" or "object identification."

The second analysis includes performing a natural language understanding process to classify the semantic intent from the voice command, wherein the first analysis is completed in a shorter computation time than the second analysis. The second analysis performed by the middleware Al model AIm is fundamentally different from the first analysis in both its purpose and technical complexity.

In some embodiments, determining the semantic intent by the middleware Al model Aim includes performing natural language understanding (NLU) on the voice command CMD to identify a task category described in the voice command CMD.

While the first analysis is a rapid, syntactic matching process designed to filter for known, structured commands, the second analysis is a deep semantic process designed to understand the meaning of unknown, unstructured, and conversational commands. Its purpose is not merely to match a command to a predefined string, but to interpret the user's underlying goal. This is achieved by employing more sophisticated techniques, such as natural language understanding and machine learning models, which can parse grammatical structures, identify key entities, and classify the user's objective even when the exact phrasing is novel. This analysis architecture enables the wearable electronic device 120 to be both highly efficient in handling common requests via the first analysis, and intelligent in processing a virtually unlimited range of complex inquiries via the second analysis.

In step S307, the middleware Al model Alm determines if the identified semantic intent involves a task category that is suitable to be performed by the first Al assistant Alp. The first Al assistant Alp is a smartphone assistant operating on the mobile communication device 140. On the other hand, the second assistant Alv is able to utilize real-time sensor data about the physical environment. When the user asks "what's the history of this structure?" in the voice command CMD, the first Al assistant Alp cannot "see", "understand" or "analyze" the structure the user is looking at, so the task category corresponding to this voice command CMD is not suitable to be performed by the first Al assistant Alp.

The first Al assistant Alp, typically embodied as a smartphone assistant, operates within the software environment of the mobile communication device 140. Its expertise lies in accessing structured data such as contact lists, calendars, and applications, as well as querying the internet for general knowledge. However, it is architecturally disconnected from the real-time sensor streams of the wearable electronic device 120. For the first Al assistant Alp, a user's command is merely a string of text; it lacks the direct perceptual context of what the user is seeing, hearing, or doing in their physical environment.

On the other hand, the second Al assistant Alv is specifically designed to interpret this very context. Its primary function is to process unstructured, real-time sensor data, such as image data from the camera 124 or motion data from an IMU, in conjunction with the voice command CMD. For example, if a user asks, "What is this plant?," the first Al assistant Alp, receiving only the text, cannot provide an answer as it has no visual input. This task is thus inherently not suitable to be performed by the first Al assistant Alp (or not supported by the first Al assistant Alp).

In response to determining that the task is suitable to be performed by the first Al assistant Alp (i.e., path Y at step S307), the voice control method 300 proceeds to step S308. For example, when the user asks, "How do I get to the nearest post office?", the middleware Al model AIm identifies the semantic intent of the voice command CMD as "navigation to a destination" in step S306. During step S307, the middleware Al model AIm determines that the first Al assistant Alp is capable of handling navigation requests to the destination "the nearest post office", the processor 121 transmits a corresponding task request to the first Al assistant Alp operating on the mobile communication device 140. The voice control method 300 then proceeds to step S321. In step S321, the first Al assistant Alp calculates the route to navigate the user to the nearest post office. A task execution response RSPa (e.g., turn-by-turn directions) is generated by the first Al assistant Alp operating on the mobile communication device 140 at step S322 and sent back to the wearable electronic device 120. In step 311, the wearable electronic device 120 receives the task execution response RSPa (turn-by-turn directions) through the communication circuit 125. In step S312, the task execution response RSPa is presented to the user by the wearable electronic device 120. For example, the task execution response RSPa can be displayed visually on the displayer 128 or be played audibly through the speaker 126.

On the other hand, in response to determining that the task is not suitable to be performed by the first Al assistant Alp (i.e., path N at step S307), the voice control method 300 proceeds to step S309.

Following aforementioned monument example, the semantic intent relates to object identification. The processor 121 triggers the camera 124 to capture real-time data (an image or a video stream of the monument) at step S309. At step S310, the processor 121 transmits this real-time data along with a task request (e.g., "identify structure and provide history") to the second Al assistant Alv operating on the remote server 160.

At step S341, the second Al assistant Alv receives the task request and related real-time data (e.g., the image data IMG or the video stream of the monument), and the second Al assistant Alv is configured to execute the task (e.g., performs a visual search and queries historical databases) accordingly. In step S342, the second Al assistant Alv is configured to generate a task execution response RSPb (e.g., introductions of the monument), which is sent back to the wearable electronic device 120.

At step S311, the wearable electronic device 120 receives the task execution response RSPb from the second Al assistant Alv. At step S312, the processor 121 presents the task execution response RSPb to the user. The presentation on the wearable electronic device 120 can involve casting an audio response through the speaker 126 (e.g., "This is the Washington Monument, completed in 1884...") and/or displaying a visual response on the displayer 128 (e.g., showing text with key facts and historical photos).

The object identification task described above is merely one example of the specialized functions that the second Al assistant Alv can perform by leveraging the sensors of the wearable electronic device 120. Numerous other embodiments are contemplated. In another example, the user, while looking at a menu in a foreign language, may issue a voice command CMD such as "Translate this for me." In response, the middleware Al model AIm would determine the intent as "live translation." The processor 121 would trigger the camera 124 to capture an image data IMG of the menu. The image data IMG would be sent to the second Al assistant Alv, which would then perform Optical Character Recognition (OCR) on the image data IMG, translate the recognized text, and send back the translated text to be displayed to the user on the displayer 128 of the wearable electronic device 120.

In yet another embodiment, a user in a parking garage may say "Remember where I parked." In response, the middleware Al model Alm would perform the second analysis on this command and classify its semantic intent as "contextual memory" or "visual bookmarking." Based on this classification, the processor 121 would then capture a visual snapshot of the surroundings (e.g., a pillar number or other landmarks) via the camera 124. The second Al assistant Alv would subsequently store this visual information, possibly along with location data, and provide a simple confirmation. Later, when the user asks "Where did I park my car?," The second Al assistant Alv can retrieve and present the stored image.

In a further embodiment, the second Al assistant Alv can act as an interactive shopping assistant. A user looking at a product on a shelf can ask, "What are the reviews for this item?" The middleware Al model Alm would analyze this voice command CMD and determine its semantic intent as "visual product query" or "product information retrieval." In response to this determination, the processor 121 would instruct the camera 124 to capture the product or the barcode in the image data IMG, and the second Al assistant Alv then identifies the product and retrieves and presents customer reviews, price comparisons, or purchasing options.

In further embodiments, the capabilities of the second Al assistant Alv can extend to educational and informational domains. For example, a user visiting a museum could look at a painting and ask, "Who is the artist of this painting?" The middleware Al model Alm would first classify the semantic intent of this query as "artwork identification." Similarly, a user on a nature trail could spot an animal and ask, "What kind of bird is that?," leading the middleware Al model Alm to determine the intent as "species identification." Likewise, a command such as "Who is this person?" would be classified by the middleware Al model Alm with the intent of "person identification."

In all these scenarios, based on the specific intent classified by the middleware Al model Alm, the processor 121 would then instruct the camera 124 to capture an image and transmit it to the second Al assistant Alv. The second Al assistant Alv would then utilize specialized image recognition models (e.g., facial recognition algorithms for person identification) and compare the image against vast databases of art, zoological, or other relevant information to identify the subject and return pertinent details, such as the artist's biography or the bird's species.

In aforesaid embodiments, the preceding examples primarily leverage the camera 124, it is to be understood that the real-time data captured by the wearable electronic device 120 is not limited to image data. Other onboard sensors can be utilized to provide contextual information to the second Al assistant Alv. In another embodiment, the wearable electronic device 120 may include an Inertial Measurement Unit (IMU) comprising an accelerometer and a gyroscope. A user engaged in a workout could issue a voice command CMD such as "Track my jogging session." The middleware Al model Alm would classify this intent as "fitness tracking." Consequently, the processor 121 would trigger the IMU to capture a continuous stream of motion and orientation data. This data would be sent to the second Al assistant Alv, which could then analyze this data to calculate metrics such as steps taken, cadence, and distance, or to automatically classify the type of activity. In yet another embodiment, the microphone 122 itself can be used as a sensor for ambient sound. Upon hearing a command like "What song is this?," the middleware Al model Alm would classify the intent as "ambient audio identification," trigger the microphone 122 to capture a sample of the ambient audio, and send it to the second Al assistant Alv to perform an audio fingerprinting analysis to identify the song title and artist.

These examples illustrate that the second Al assistant Alv is fundamentally designed to bridge the gap between the user's physical environment and digital information by processing real-time sensor data.

The instructions for executing the voice control method 300 may be stored on a non-transitory computer-readable medium, as recited in claim 20. When these instructions are executed by the processor 121 of the wearable electronic device 120, they cause the device to perform the intelligent, hybrid voice control method described herein.

In conclusion, the present disclosure provides a robust and intelligent system that seamlessly integrates the strengths of a general-purpose smartphone assistant and a specialized, sensor-aware assistant. By employing aforesaid approach, the wearable electronic device 120 is able to respond quickly to simple commands and is also able to handle complex, context-aware requests, thereby creating a smooth and powerful user experience on the wearable electronic device 120.

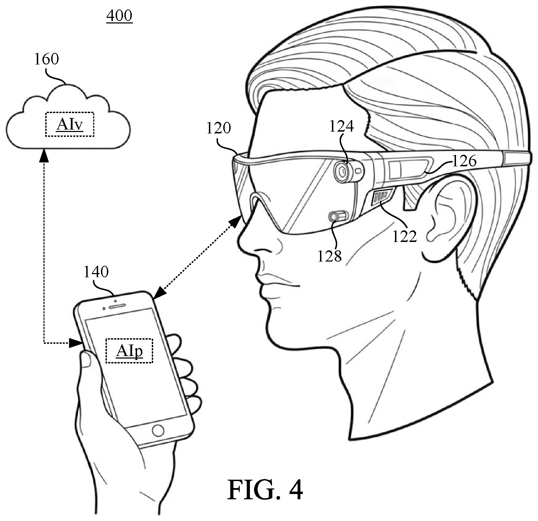

FIG. 4 illustrates another configuration of a hybrid Al assistant system 400 according to another embodiment of the disclosure. This embodiment demonstrates a different communication pathway. In the embodiments shown in FIG. 4, the wearable electronic device 120 primarily communicates with the mobile communication device 140. The mobile communication device 140 then acts as a gateway or proxy, relaying requests intended for the second Al assistant Alv, to the remote server 160. This configuration can be advantageous for managing communication protocols, consolidating data traffic through a single channel, or leveraging the more powerful cellular or Wi-Fi radio of the mobile communication device 140. Details about the voice control method 300 and the functions of the first Al assistant Alp and the second Al assistant Alv remain the same, with the mobile communication device 140 facilitating the communication link to the remote Alv.

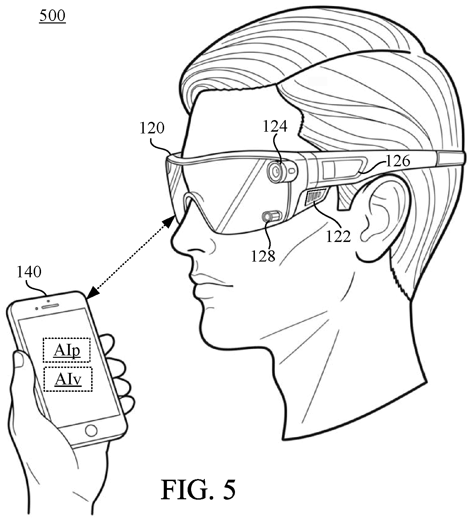

FIG. 5 illustrates another configuration of a hybrid Al assistant system 500 according to another embodiment of the disclosure. In this embodiment shown in FIG. 5, both the first Al assistant Alp and the second Al assistant Alv reside and operate on the mobile communication device 140. This architecture eliminates the need for a constant connection to a remote server for specialized Al tasks. This embodiment is particularly useful when the mobile communication device 140 has sufficient processing power (e.g., through a dedicated Neural Processing Unit) to run the specialized models of the second Al assistant Alv locally. It is able to reduce latency, enhance user privacy since sensitive sensor data does not need to be transmitted to the remote server, and the ability to function offline. The wearable electronic device 120 still performs the voice control method 300 as described in FIG. 3. The difference is that the real-time data and the task request in step S310 is now transmitted to the second Al assistant Alv operating on the mobile communication device 140, because the first Al assistant Alp and the second Al assistant Alv are both running on the mobile communication device 140 in the embodiments shown in FIG. 5.

Therefore, as illustrated by the embodiments in FIG. 1, FIG. 4, and FIG. 5, the physical location and communication architecture of the second Al assistant Alv are flexible. The voice control method performed by the wearable electronic device 120, which selectively routes tasks based on semantic intent, regardless of whether the second Al assistant Alv is implemented as a cloud-based service, a function of the mobile communication device 140, or even, in future embodiments with sufficient processing power, as a component running directly on the wearable electronic device 120 itself. This architectural flexibility allows the system to adapt to different hardware capabilities, network conditions, and user privacy requirements without altering the fundamental logic of the hybrid Al assistant framework. The wearable electronic device 120 is simply configured to transmit the task request and sensor data to the designated address or endpoint of the second Al assistant Alv, as determined by the system's configuration.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A voice control method, for a wearable electronic device, comprising:
receiving a voice command from a user via a microphone of the wearable electronic device;
performing a first analysis to determine whether the voice command matches a set of predefined commands, wherein the set of predefined commands comprises a first subset and a second subset;
in response to determining that the voice command matches a predefined command in the first subset, transmitting the voice command to a first artificial intelligence (AI) assistant operating on a mobile communication device communicatively coupled with the wearable electronic device;
in response to determining that the voice command matches another predefined command in the second subset, executing the voice command directly on the wearable electronic device;
in response to determining that the voice command does not match any predefined command in the set of predefined commands, performing a second analysis by a middleware Al model operating on the wearable electronic device to determine a semantic intent of the voice command; and
based on the semantic intent, selectively transmitting a task request corresponding to the voice command to one of the first Al assistant or a second AI assistant, wherein the first Al assistant and the second Al assistant are configured to process different categories of tasks.

2. The voice control method of claim 1, wherein the first analysis comprises performing a keyword matching or a string matching operation between the voice command and the set of predefined commands,
the second analysis comprises performing a natural language understanding process to classify the semantic intent from the voice command, wherein the first analysis is completed in a shorter computation time than the second analysis.

3. The voice control method of claim 1, wherein the first Al assistant comprises a smartphone assistant integrated with an operating system of the mobile communication device, and
the second Al assistant is configured to perform the task utilizing a real-time data captured by the wearable electronic device about a physical environment around the wearable electronic device.

4. The voice control method of claim 1, further comprising:
in response to the middleware Al model determining that the semantic intent of the voice command relates to an object identification, a person identification, a visual recording or a visual scanning, triggering a camera on the wearable electronic device to capture image data; and
transmitting the image data along with the task request to the second Al assistant.

5. The voice control method of claim 1, further comprising:
in response to the middleware Al model determining that the semantic intent of the voice command relates to a navigation to a destination; and
sending the task request to the first Al assistant.

6. The voice control method of claim 1, wherein the first subset of predefined commands are associated with at least one of making a phone call, sending a message, setting a reminder, setting an alarm or playing music to be executed on the mobile communication device.

7. The voice control method of claim 1, wherein the second subset of predefined commands are associated with at least one of adjusting a voice volume, taking a photo or recording a video to be executed on the wearable electronic device.

8. The voice control method of claim 1, wherein determining the semantic intent by the middleware Al model comprises performing natural language understanding on the voice command to identify a task category described in the voice command.

9. A wearable electronic device, comprising:
a microphone;
a communication circuit, communicatively connected to a mobile communication device;
a processor, coupled with the microphone and the communication circuit, wherein the processor is configured to:
receive, via the microphone, a voice command from a user;
perform a first analysis to determine whether the voice command matches a set of predefined commands, wherein the set of predefined commands comprises a first subset and a second subset;
in response to determining that the voice command matches a predefined command in the first subset, transmit the voice command to a first artificial intelligence (AI) assistant operating on a mobile communication device communicatively coupled with the wearable electronic device;
in response to determining that the voice command matches another predefined command in the second subset, execute the voice command directly on the wearable electronic device;
in response to determining that the voice command does not match any predefined command in the set of predefined commands, perform a second analysis by a middleware Al model to determine a semantic intent of the voice command; and
based on the semantic intent, selectively transmit a task request corresponding to the voice command to one of the first Al assistant or a second Al assistant, wherein the first Al assistant and the second Al assistant are configured to process different categories of tasks.

10. The wearable electronic device of claim 9, wherein the first Al assistant is a smartphone assistant integrated with an operating system of the mobile communication device, and
the second Al assistant is configured to perform the task utilizing a real-time data captured by the wearable electronic device about a physical environment around the wearable electronic device.

11. The wearable electronic device of claim 9, further comprising a camera, wherein the processor is further configured to:
in response to the middleware Al model determining that the semantic intent relates to an object identification, trigger the camera to capture image data; and
send the image data along with the task request to the second Al assistant.

12. The wearable electronic device of claim 9, wherein the first subset of predefined commands is associated with functions of the mobile communication device, and the second subset of predefined commands is associated with hardware functions of the wearable electronic device itself.

13. The wearable electronic device of claim 9, wherein to perform the first analysis, the processor is configured to execute a keyword matching or a string matching operation between the voice command and the set of predefined commands, and wherein to perform the second analysis, the processor is configured to execute a natural language understanding process to classify the semantic intent from the voice command.

14. The wearable electronic device of claim 9, wherein:
the first subset of predefined commands comprises at least one of making a phone call, sending a message, or setting a reminder; and
the second subset of predefined commands comprises at least one of adjusting a voice volume, taking a photo, or recording a video.

15. A non-transitory computer-readable medium having stored thereon instructions that, when executed by a processor of a wearable electronic device, cause the device to perform a method comprising:
receiving, via a microphone, a voice command from a user;
performing a first analysis to determine whether the voice command matches a set of predefined commands, wherein the set of predefined commands comprises a first subset and a second subset;
in response to determining that the voice command matches a predefined command in the first subset, transmitting the voice command to a first artificial intelligence (AI) assistant on a mobile communication device communicatively connected with the wearable electronic device;
in response to determining that the voice command matches another predefined command in the second subset, executing the voice command directly on the wearable electronic device;
in response to determining that the voice command does not match any predefined command in the set of predefined commands, performing a second analysis by a middleware Al model to determine a semantic intent of the voice command; and
based on the semantic intent, selectively transmitting a task request corresponding to the voice command to one of the first Al assistant or a second AI assistant, wherein the first Al assistant and the second Al assistant are configured to process different categories of tasks.
